# FASCICULE DE BREVET EUROPEEN

(11) **EP 0 809 878 B1**
(45) Date de publication et mention de la délivrance du brevet: **14.10.1998**
(21) Numéro de dépôt: 96904130.0
(22) Date de dépôt: 13.02.1996
(51) Int. Cl.: H02K 1/17, H02K 1/27

(54) **INDUCTEUR COMPOSITE POUR MACHINES TOURNANTES ELECTRIQUES COMPORTANT DES AIMANTS PERMANENTS FRITTES ENROBES DANS UN LIANT FERROMAGNETIQUE**
ZUSAMMENGESETZTER INDUKTOR FÜR ROTIERENDE ELEKTROMASCHINE, DER MIT EINEM FERROMAGNETISCHEN BINDEMITTEL ÜBERZOGENE, GESINTERTE DAUERMAGNETEN ENTHÄLT
COMPOSITE INDUCTOR FOR ELECTRIC ROTARY MACHINES COMPRISING SINTERED PERMANENT MAGNETS COATED WITH A FERROMAGNETIC BINDER

(30) Priorité: 16.02.1995 FR 9502009
(43) Date de publication de la demande: 03.12.1997
(73) Titulaire: UGIMAG S.A., F-38830 Saint-Pierre-d'Allevard (FR)
(72) Inventeur: BRASSARD, Serge, F-38530 Pontcharra (FR)
(74) Mandataire: Mougeot, Jean-Claude
(86) Numéro de dépôt international: FR9600231
(87) Numéro de publication internationale: WO9625785

(56) Documents cités:
- DE-A- 2 302 947
- DE-A- 2 835 441
- FR-A- 2 617 343
- FR-A- 2 617 344
- PATENT ABSTRACTS OF JAPAN vol. 005, no. 186 (E-084), 25 Novembre 1981 & JP,A,56 112868 (MATSUSHITA ELECTRIC IND CO LTD), 5 Septembre 1981
- PATENT ABSTRACTS OF JAPAN vol. 009, no. 291 (E-359), 19 Novembre 1985 & JP,A,60 131055 (HITACHI SEISAKUSHO KK), 12 Juillet 1985

## Description

### DOMAINE TECHNIQUE

L'invention concerne un inducteur de machine tournante électrique comportant des aimants permanents frittés enrobés dans un liant ferromagnétique.

Les machines électriques tournantes sont principalement les moteurs électriques ou les générateurs électriques, par exemple pour les auxiliaires automobiles; elles comportent un inducteur qui est généralement le stator mais parfois le rotor.

### ETAT DE LA TECHNIQUE

Habituellement un inducteur comprend une culasse, pièce tubulaire cylindrique dont la section droite présente au moins un axe de symétrie et est généralement de forme circulaire, polygonale ou carrée aux angles arrondis.

Sur la paroi intérieure de la culasse en matériau magnétique doux, sont fixés un ou plusieurs aimants permanents en matériau magnétique dur. Ils peuvent être de forme annulaire, une seule pièce aimantée recouvrant le pourtour intérieur de la section droite, ou sous forme de plusieurs pièces aimantées réparties symétriquement sur ledit pourtour; ces pièces peuvent alors avoir une section droite par exemple rectangulaire ou préférentiellement être un secteur de couronne circulaire, ou peuvent avoir au moins une face à section circulaire adaptée à l'induit.

Lesdits aimants permanents peuvent être des pièces frittées, ou des aimants liés composites, la matière aimantée étant par exemple noyée dans une résine solide. Ils sont tels qu'ils laissent au centre de la culasse un espace dans lequel prend place l'induit de la machine tournante.

Des pièces polaires peuvent compléter les aimants permanents du côté de l'induit pour modifier le flux magnétique et améliorer les performances de la machine tournante.

La matière active des aimants permanents est de type connu, par exemple ferrite, alliage contenant des terres-rares (comme Nd-Fe-B ou Sm-Co) ou autres matériaux. Les pièces polaires sont en matériau magnétique doux, comme la culasse, par exemple en acier.

Entre les aimants ou les pièces polaires et l'induit se situe l'espace d'entrefer dont l'épaisseur doit être aussi réduite et régulière que possible. Dans les fabrications de moteurs en série elle est habituellement de l'ordre de 0,6 à 1 mm. Il est difficile d'avoir une épaisseur plus faible compte tenu en particulier que la culasse, à laquelle sont adossés les aimants avec éventuellement leurs pièces polaires, est généralement en acier roulé ou embouti et présente une irrégularité géométrique, due aux tolérances dimensionnelles et de symétrie, qui est cumulée avec celle des autres composants.

Pour arriver à ce résultat, il est nécessaire de faire subir à l'aimant un usinage soigné et coûteux. Cet usinage demande en particulier beaucoup de soin lorsque l'aimant est en matériau fritté.

Cependant il est parfois possible de réaliser des entrefers d'épaisseur réduite jusqu'à 0,3mm en accumulant les précautions d'usinage et d'assemblage des différents composants de l'inducteur, précautions qui sont souvent délicates à réaliser et conduisent à une importante augmentation de coût.

Les aimants sont habituellement fixés dans la culasse à l'aide d'agrafes ou épingles amovibles, par maintien dans une cage amagnétique (par ex. en matière plastique) ou par collage ou injection d'une résine amagnétique.

Il est aussi connu et avantageux pour effectuer le montage des aimants de réaliser une pièce rigide comportant des aimants usinés (avec éventuellement leurs pièces polaires) surmoulés à l'aide d'un matériau amagnétique par exemple de l'aluminium ou une résine thermodurcissable.

L'ensemble rigide est ensuite introduit et positionné aisément dans la culasse; il peut également être obtenu en surmoulant les aimants directement dans la culasse.

Dans tous les cas les aimants sont en contact avec la culasse, ou avec des pièces équivalentes, en matériau ferromagnétique doux, de façon à assurer un circuit continu de flux magnétique entre les aimants indispensable au fonctionnement du moteur.

Une solution de ce type est connue du brevet FR.2617344. Des aimants composites (4), associés éventuellement à des pièces polaires additionnelles, dont le profil de la face polaire est adaptée et concentrique à l'induit, réalisés à partir d'une poudre de Nd-Fe-B mélangée à un liant ou compactée, sont en contact avec la culasse (1) et sont éventuellement associés à des pièces polaires additionnelles ; ils sont surmoulés dans ladite culasse (1) à l'aide d'une résine qui assure leur fixation grâce aux parties latérales (7); en outre l'aimant se trouve protégé, sur sa face polaire en regard avec l'induit, par un voile de résine (5) d'épaisseur constante d'environ 5 mm contre une atmosphère éventuellement corrosive.

Ainsi dans le mode de réalisation décrit, l'épaisseur d'entrefer aimant/induit sera plus grande que les valeurs habituelles de 0,6 à lmm données ci-dessus puisqu'il faudra y ajouter l'épaisseur de substance amagnétique (5) recouvrant la face polaire de l'aimant; les performances de la machine tournante en seront affectées d'autant, même si la distance séparant la substance amagnétique surmoulée (5) de l'induit est très faible (par exemple 0,3mm).

Il est également connu du brevet JP-A-60 131055, un aimant lié (4), c'est-à-dire à base d'un matériau magnétique dur dispersé dans un liant thermoplastique, moulé sur l'entière périphérie intérieure de la culasse, ledit aimant comportant également des pôles auxiliaires (3). Là encore le profil de la face polaire de l'aimant est adapté et concentrique à la carcasse et à l'induit et l'entrefer d'épaisseur constante est déterminé uniquement par la distance entre l'aimant et l'induit. Par ailleurs, même si l'épaisseur d'entrefer peut être faible grâce à l'emploi d'un aimant moulé sur la culasse, le moteur verra ses performances réduites à cause de l'emploi dudit aimant moulé.

Il est encore connu du brevet FR 2 617 343 un inducteur comportant des aimants identiques à ceux du brevet précédent FR 2 617 344, c'est-à-dire des aimants liés dont la face polaire a une forme correspondant à celle de l'induit ; ces aimants, éventuellement associés à des pièces polaires additionnelles, sont fixés à la culasse et protégés contre la corrosion à l'aide d'une enveloppe métallique (en tôle) épousant l'intégralité du contour des pôles magnétiques formés par les ensembles aimants et pièces polaires. Comme précédemment l'aimant a une forme adaptée à l'induit, la distance aimant (ou pôle magnétique)-induit étant constante.

Dans un tel montage il doit y avoir concentricité entre l'inducteur et la culasse pour avoir un entrefer aimant-induit le plus réduit possible, ce qui exige montage et usinages soignés des différents composants. Malgré cela l'homme du métier ne s'attend pas à obtenir une épaisseur d'entrefer inférieure à 0,6 mm, comme cela a été déjà vu.

Il est encore connu du brevet FR 2 169 938 un inducteur comportant des aimants plats (110) en contact avec des pièces de trajets de flux (116), maintenus à l'aide d'un carter surmoulé en matière plastique (16). Ce carter constitue un entrefer supplémentaire amagnétique entre les aimants et l'induit ; il a une face concentrique à l'induit et a une épaisseur 5 variable pour compenser le fait que la surface polaire des aimants n'est pas adaptée et concentrique à l'induit. Un tel inducteur présente, du fait de cette forme d'aimant, des caractéristiques inférieures à celles d'un inducteur ayant des aimants adaptés et concentriques à l'induit. En particulier pour une même puissance, un moteur ayant ce type d'aimant plat nécessitera une masse plus importante d'aimant et sera de ce fait beaucoup plus volumineux et cher.

Il apparaît donc que les moteurs ayant les meilleures performances sont obtenus avec des inducteurs comportant des aimants usinés ou moulés de façon précise et ainsi adaptés et concentriques à l'induit de façon à réduire le plus possible l'épaisseur d'entrefer et les pertes magnétiques.

Les moteurs ayant les meilleures performances sont par ailleurs ceux qui utilisent des aimants frittés de préférence à des aimants liés, même si ces derniers sont moulés concentriquement à l'induit. En effet un aimant lié a toujours des caractéristiques magnétiques inférieures à celle des aimants frittés à cause de son isotropie cristallographique. Le fait que lesdits aimants liés soient fixés à la culasse par surmoulage à l'aide de polymère plastique ne permet pas de rattraper la différence.

On peut noter également, d'après ce qui précède, que les aimants ou les pôles magnétiques sont toujours en contact avec la culasse ou avec des pièces de trajets de flux et que pour obtenir des moteurs ayant des performances acceptables il est nécessaire d'avoir la plus faible et la plus régulière épaisseur d'entrefer possible. Pour cela la culasse doit être concentrique à l'induit de même que les aimants qui y sont fixés. Ceci entraîne la nécessité d'avoir des tolérances très serrées sur la culasse, sur l'usinage des aimants et des pièces polaires additionnelles, sur le montage de ces ensembles et plus généralement sur l'assemblage inducteur-induit pour en assurer la concentricité.
Le fait de surmouler les aimants ne permet pas de s'affranchir de ces nécessités, le surmoulage ajoutant par ailleurs, comme cela a déjà été dit, une épaisseur supplémentaire d'entrefer.

Ainsi lesdits moteurs à aimants frittés et usinés pour correspondre à l'induit et déterminer l'entrefer ont encore des caractéristiques limitées du fait que l'épaisseur d'entrefer est toujours trop importante puisqu'elle doit prendre en compte les tolérances dimensionnelles de la culasse et du montage en général. De plus l'usinage des aimants rend ces moteurs coûteux.

Aussi la demanderesse a-t-elle cherché à mettre au point des inducteurs permettant d'améliorer les performances des moteurs.
Elle a également cherché à en diminuer le coût.

Elle a pour cela en particulier cherché à mettre au point des inducteurs comportant des aimants permanents ne nécessitant qu'un usinage partiel et peu onéreux, par exemple un simple dégrossissage, voir aucun usinage, ou plus généralement des aimants dont la forme n'a pas besoin d'être rigoureuse, tout en permettant au moins le maintien, mais plus généralement une amélioration, des caractéristiques des machines tournantes obtenues.

Elle a également cherché à mettre au point des inducteurs ne nécessitant pas d'exigences ou de tolérances précises pour le positionnement relatif des aimants ou pôles magnétiques et de la culasse, ou pour la concentricité de la culasse avec l'induit.

Elle a recherché également à mieux contrôler la dispersion des lignes de flux dans l'entrefer ce qui permet encore d'améliorer les performances individuelles des machines tournantes et aussi l'homogénéité des productions en série de machines, tout en conservant une grande facilité de montage.

Elle a encore cherché à obtenir de faibles entrefers, par exemple d'au plus 0,3mm, tout en conservant les avantages ci-dessus.

### DESCRIPTION DE L'INVENTION

L'invention est un inducteur pour machine tournante électrique comportant une culasse cylindrique creuse ou pleine sur une paroi latérale de laquelle est fixé au moins un aimant ayant une face polaire située en regard d'un induit, caractérisé en ce que l'aimant est fixé à la culasse par un surmoulage enrobant au moins ladite face polaire à l'aide d'un matériau composite de surmoulage comprenant un matériau ferromagnétique dispersé dans un liant solide amagnétique.

L'invention concerne le plus souvent un inducteur comportant une culasse cylindrique creuse sur la paroi intérieure de laquelle le ou les aimants sont fixés. L'induit se trouve alors à l'intérieur de l'inducteur. Mais elle concerne également un inducteur comportant une culasse ou noyau cylindrique, plein ou creux, sur la paroi extérieure duquel le ou les aimants sont fixés. L'induit entoure alors l'inducteur.

Ainsi l'invention concerne un inducteur que celui-ci soit stator ou rotor et qu'il soit situé à l'extérieur ou à l'intérieur de l'induit.

L'invention est surtout appliquée à la production en série de générateurs ou moteurs électriques en particulier pour les auxiliaires automobiles, où l'inducteur est généralement le stator.

La culasse (ou le noyau) a généralement une section droite avec un centre de symétrie; elle est par exemple de forme polygonale avec des angles arrondis, ou de préférence circulaire (par exemple en forme de tube). Elle est habituellement en matériau ferromagnétique dense, par exemple acier, de façon à boucler les lignes de flux magnétiques.

Il n'est cependant pas nécessaire que la culasse ait des tolérances précises ; elle peut ainsi présenter des faux ronds ou des défauts de symétrie ; de même elle peut ne pas être concentrique à l'induit. Ceci représente un avantage car cela simplifie leur mode d'obtention et leur coût.

Selon une configuration préférée de l'invention, l'inducteur comprend plusieurs aimants permanents qui constituent autant de pôles. Ils ont habituellement une forme en tuile canal telle que leur section droite est un secteur de couronne circulaire, dont le diamètre intérieur est adapté à celui de l'induit.

Mais l'invention permet également d'utiliser des aimants à section droite rectangulaire, ou carrée, pour obtenir des machines tournantes ayant de très bonnes performances.

Il n'est pas nécessaire que les aimants soient au contact de la culasse ou des pièces de trajet de flux. De même il n'est pas nécessaire qu'ils soient montés concentriquement à l'induit.

Ainsi l'invention permet de cumuler l'emploi de composants ayant des tolérances ou des exigences peu contraignantes, donc peu coûteux, et des contraintes d'assemblage allégées également peu exigeantes. Il suffit que la surface de la matière composite de surmoulage faisant face à l'induit et déterminant l'épaisseur d'entrefer soit concentrique à l'induit, ave les meilleures tolérances possibles.

Les aimants sont de type connu. Ils peuvent être des aimants permanents à base de ferrite ou de terres rares et métal de transition (par ex. Fe-Nd-B ou Sm-Co ...) et peuvent se présenter sous forme de pièces frittées, moulées, obtenues par déformation d'une ébauche ou des pièces composites comprenant le matériau aimanté magnétique dur dispersé dans une matrice solide amagnétique, par exemple une résine. Ils sont habituellement positionnés à proximité de la paroi latérale de la culasse et de façon à ce que leur grand axe soit parallèle à celui de la culasse.

Leur fixation est obtenue grâce au surmoulage. Ce dernier peut être effectué par injection, extrusion, compaction, moulage, etc... pour former une pièce rigide qui est ensuite mise en place sur la culasse; le matériau de surmoulage peut également être mis en oeuvre directement dans, et éventuellement autour de, la culasse après avoir mis en place les aimants.
Le matériau de surmoulage enrobe au moins partiellement chacun des aimants, les maintient en place les uns par rapport aux autres et par rapport à la culasse. Le surmoulage est tel que les aimants sont répartis à la surface périphérique de la culasse et qu'il délimite le diamètre de l'inducteur. C'est ce diamètre complété avec l'épaisseur de l'entrefer qui donnera le diamètre de l'induit.

Le matériau de surmoulage recouvre la face polaire de l'aimant en regard avec l'induit et puisqu'il contient un matériau ferromagnétique, c'est lui qui assure et règle l'entrefer avec ledit induit. La couche de matière de surmoulage recouvrant la face polaire est appelée couche polaire; elle est la plus mince possible pour éviter les fuites de flux magnétiques transversales ; son épaisseur généralement variable permet de recouvrir les irrégularités de forme de la face polaire et de positionnement des aimants qui ne sont pas concentriques ou adaptés à l'induit ; par contre la face intérieure du surmoulage est adaptée et concentrique à l'induit. L'épaisseur est généralement comprise entre 0,5 et 5mm et de préférence entre 0,5 et 1,5 mm pour les moteurs courants.

Entre deux aimants consécutifs, on peut disposer un pont (ou zone de retour) de matière composite de surmoulage, qui assure en particulier la rigidité de l'ensemble inducteur, peut éviter de prévoir des points d'ancrage dans la culasse et permet de désaturer la culasse. Il est cependant avantageux d'en réduire la présence au strict minimum ; son épaisseur est de préférence de l'ordre de 1 à 4 mm pour éviter des fuites magnétiques.

Le matériau composite de surmoulage comprend généralement un métal ferromagnétique doux (par ex. au moins Fe, Co, Ni ou leurs alliages et éventuellement d'autres éléments d'additions connus) dispersé dans un matériau amagnétique solide par exemple une résine ou un liant thermodurcissable ou thermoplastique tels que les polyamides, polyesters, les polyestertéréphtalates (PET), les résines phénoliques, époxy, etc...

La perméabilité magnétique de ce composite est toujours plus grande que 1 puisque le liant amagnétique contient un métal ferromagnétique; elle est généralement supérieure à 2 et de préférence comprise entre 4 et 40.

Le taux de métal ferromagnétique se situe de préférence entre 10 et 40% (en volume).

Il est à noter que des pièces polaires en métal ferromagnétique doux ou des inserts amagnétiques, par ex. de positionnement, peuvent être également noyées dans le matériau de surmoulage selon les besoins.

Les aimants permanents peuvent, comme cela a été dit, se contenter d'un usinage réduit ou sommaire pour éliminer les gros défauts, voire aucun usinage. En effet dans l'invention l'épaisseur et la régularité de l'entrefer ne sont pas déterminées par l'intervalle entre un aimant usiné avec précision et l'induit selon l'art antérieur, mais c'est la matière de surmoulage ou d'enrobage contenant le matériau dispersé magnétique doux et mis en forme à des cotes précises qui assure l'entrefer et qui permet de s'affranchir des irrégularités résultant d'un aimant non parfaitement usiné ou positionné ou d'une culasse imparfaite.

L'invention est ainsi particulièrement adaptée à l'emploi d'aimants permanents frittés non usinés ou de forme rudimentaire ou simple, faciles et moins coûteux à obtenir. En effet la présence du matériau ferromagnétique dans le surmoulage permet de conserver les très bonnes propriétés magnétiques des inducteurs comprenant des aimants frittés usinés sans supporter le coût de leur usinage ou d'une mise en forme élaborée.

La présence de matériau ferromagnétique dans le surmoulage enrobant l'aimant permet de régulariser l'induction magnétique dans l'entrefer et de minimiser ainsi la variation de couple de la machine consécutive aux variations brusques d'induction dans l'entrefer due à l'aimant de forme irrégulière ou non adaptée à l'induit. De plus, le surmoulage permet une immobilisation complète et rigide de l'aimant, qui ne génère plus de vibrations mécaniques. Ainsi les bruits d'origine magnétique et mécanique sont considérablement réduits.

Le fait de pouvoir mettre en forme aisément le matériau de surmoulage directement à des cotes précises correspondant à l'induit, permet d'obtenir des épaisseurs d'entrefer très réduites toujours inférieures à 0,7mm mais pouvant aisément atteindre ou être inférieures à 0,3mm. En pratique on utilise souvent cette valeur qui représente un bon compromis entre une épaisseur d'entrefer plus faible qui permet une augmentation du couple moteur et une épaisseur plus élevée moins sensible aux irrégularités géométriques et magnétiques du montage.

L'invention permet cependant en cas de besoin de réduire encore l'épaisseur d'entrefer sans altérer sensiblement la régularité de fonctionnement de la machine tournante et la constance des caractéristiques lors de la production en série.

Un autre avantage de l'invention réside dans le fait qu'il n'est pas nécessaire d'utiliser une culasse ayant des tolérances serrées ou concentriques à l'induit, de procéder à un positionnement rigoureux des aimants au contact de la culasse ou d'utiliser des aimants reproduisant fidèlement la forme de l'induit ; en effet, à l'inverse de ce qui est nécessaire dans l'art antérieur, ce n'est pas des aimants que dépend l'entrefer mais du matériau de surmoulage.

Quand l'inducteur comprend plusieurs aimants permanents, il est particulièrement avantageux que les fuites magnétiques se produisant par les parties latérales du matériau de surmoulage enrobant les bords (le pourtour) des aimants soient réduites au minimum afin de limiter les pertes de flux magnétique dans la culasse.
Pour cela on peut réduire au minimum l'épaisseur de cette partie latérale qui ne dépasse pas en général 1 à 4mm. On peut également la supprimer complètement, en laissant cependant subsister par endroits des plots de raccordement en matériau de surmoulage qui contribuent au maintien des aimants et au raccordement de la couche polaire avec la zone de retour. Ces parties latérales ou les plots de raccordement peuvent aussi être réalisés en matériau de surmoulage amagnétique, constituant ainsi un assemblage composite ferromagnétique et amagnétique des aimants dans la culasse.

D'autres possibilités offertes grâce aux avantages apportés par l'invention consistent par exemple :
- à encombrement du moteur constant et à entrefer également constant, à diminuer le volume d'aimant non usiné pour obtenir un flux sensiblement équivalent à celui d'une structure standard de l'art antérieur utilisant des aimants usinés maintenus dans la culasse par collage, surmoulage amagnétique ou fixation mécanique;
- à encombrement du moteur constant, à diminuer l'entrefer ainsi que le volume d'aimant non usiné pour obtenir un flux supérieur à celui de ladite structure, donc à améliorer les performances de la machine tournante;
- à volume d'aimant constant et à entrefer éventuellement réduit, à accroître considérablement le flux par rapport à ladite structure standard, donc les performances de la machine tournante;
- à encombrement constant et à entrefer éventuellement réduit, à accroître le volume d'aimant non usiné en augmentant l'angle de couverture d'un pôle. Habituellement, et spécialement dans le cas des aimants frittés anisotropes ayant la forme de tuile canal, les contraintes de fabrication ne permettent pas de réaliser d'un seul tenant et de manière économique, des aimants présentant un angle de couverture important. Ainsi grâce au surmoulage de l'invention un pôle peut être réalisé en accolant bord à bord plusieurs aimants aimantés dans la même direction; ceci permet d'obtenir facilement des angles de couverture très importants, par exemple dépassant aisément 140 à 160°.

En effet, la présence du matériau de surmoulage ferromagnétique, particulièrement entre des aimants contigus de même polarité formant le pôle, permet, malgré le fractionnement magnétique du pôle, d'assurer une bonne homogénéité de l'induction magnétique sous le pôle. Cette façon d'augmenter le volume d'aimant est économique et permet des gains de flux et de performances qui peuvent être très importants;
- à constituer, selon la méthode précédente, une couronne circulaire complète à l'aide de plusieurs aimants jointifs maintenus par le surmoulage ferromagnétique et aimantés pour obtenir un nombre quelconque de pôles magnétiques;
- à recouvrir au moins partiellement l'autre paroi latérale de la culasse ne comportant pas les aimants, ce qui permet d'utiliser des culasses réalisées à l'aide d'une simple tôle roulée ou emboutie pour obtenir un cylindre non nécessairement fermé et ayant des tolérances géométriques élargies. Dans ce cas, la culasse cylindrique peut même être réalisée à partir d'arcs de cylindres accolés, l'ensemble étant surmoulé simultanément avec les aimants à l'aide du liant ferromagnétique selon l'invention.

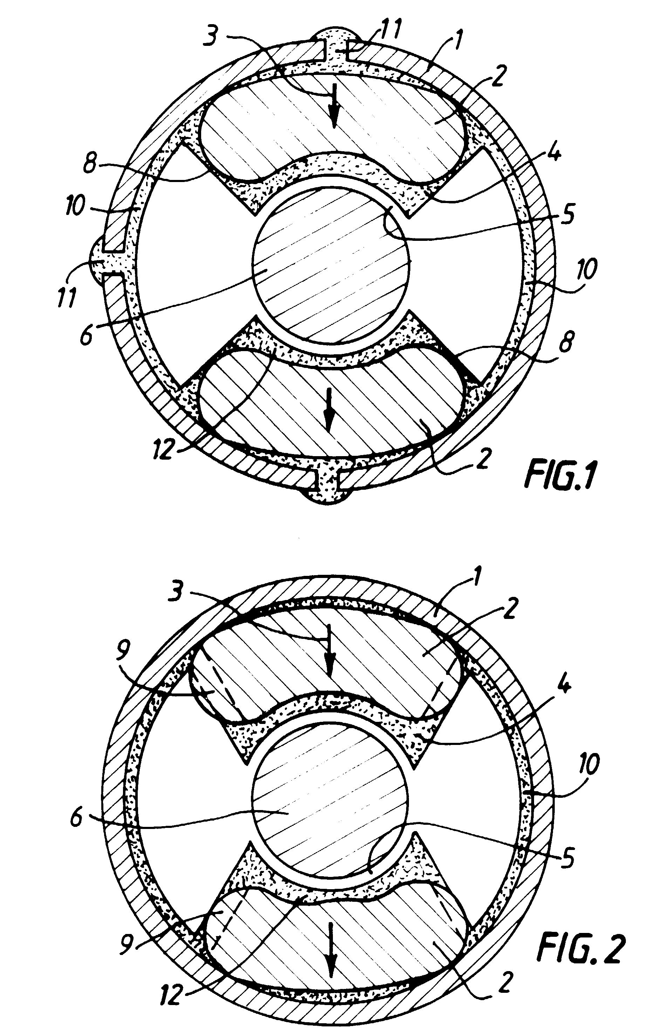

Les figures 1 et 2 illustrent un moteur possédant un inducteur fixe extérieur selon la présente invention et un induit mobile intérieur.

En (1) on voit la culasse, en matériau ferromagnétique doux, en (2) des aimants permanents en matériau ferromagnétique dur non usinés ou usinés sommairement avec les flèches (3) indiquant le sens du champ magnétique. Le matériau de surmoulage (4) contient un produit ferromagnétique doux dispersé, représenté par le pointillé, dans une matrice solide amagnétique, par exemple une résine. On voit que l'entrefer (5) est bien délimité par le matériau de surmoulage (4) contenant le produit ferromagnétique doux et l'induit (6).

Sur les figures 1 et 2, les deux aimants sont séparés l'un de l'autre. Dans la figure 1 le matériau de surmoulage a alors été conformé de façon à ce que les parties latérales (8) enrobant les bords desdits aimants soient suffisamment minces pour éviter des fuites magnétiques trop importantes. Dans la figure 2 les parties latérales ont été supprimées et remplacées par des plots de raccordements (9) en matériau de surmoulage traversant l'aimant par des lumières pratiquées par endroits et assurant la cohésion du surmoulage et des aimants. En (10) on voit une zone de retour étroite assurant la rigidité de l'ensemble matériau de surmoulage/aimants.

Le surmoulage a été fait directement dans la culasse et on voit dans le cas de la figure 1 que le matériau de surmoulage (4) traverse par endroits ladite culasse pour former des points d'ancrage (11). Mais dans le cas de la figure 2 le surmoulage a été effectué en dehors de la culasse et l'ensemble rigide matériau de surmoulage/aimants a été introduit ensuite dans ladite culasse puis éventuellement solidarisé avec elle par tous moyens connus.

On voit en (12) la couche polaire en matériau de surmoulage composite qui permet de s'affranchir des irrégularités géométriques des aimants permanents, tout en permettant de régler de façon très précise le diamètre intérieur de l'inducteur et donc à bien maîtriser l'épaisseur d'entrefer, en particulier dans le cas des faibles épaisseurs; ceci conduit à améliorer les caractéristiques des machines tournantes tout en facilitant leur construction, y compris lors de la production en série, et en abaisse le prix grâce à l'absence d'usinage précis des aimants.

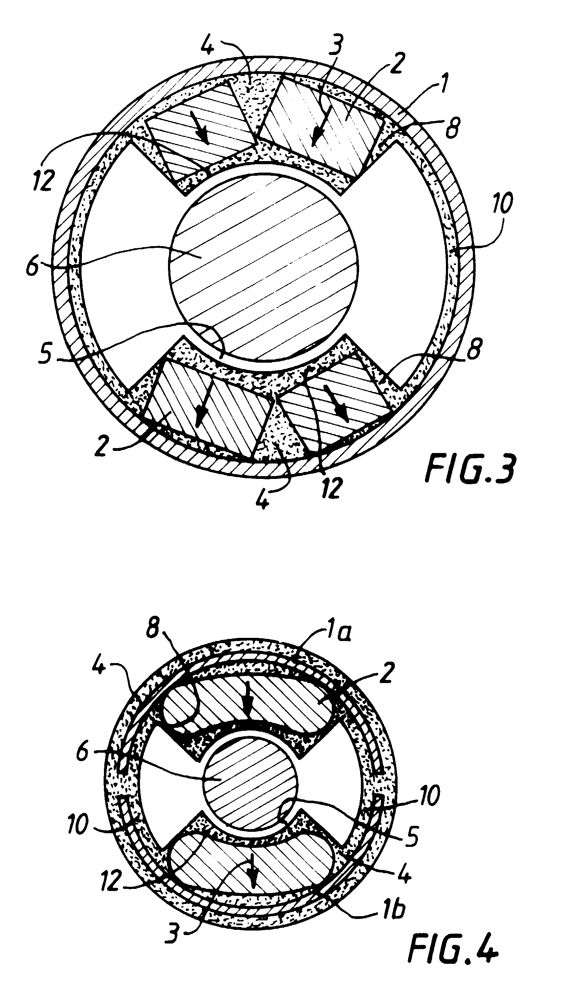

La figure 3 représente, dans un moteur de même type que ceux des figures 1 et 2, un inducteur selon l'invention dans lequel chacun des pôles est fait de plusieurs aimants (2) accolés côte à côte, ces aimants ayant de plus, grâce à l'invention, une forme de plaquette parallélépipédique allongée.

La figure 4 représente un cas où la culasse est en deux demi-coquilles (ou arc de cylindre) (1a) et (1b) et où le surmoulage selon l'invention enrobe à la fois les aimants (2) et les deux demi-coquilles (1a) et (1b) pour obtenir un inducteur rigide. Le point de jonction entre les deux demi-coquilles peut être situé n'importe où, par rapport à l'axe des pôles.

### EXEMPLES

### Exemple 1

On a comparé plusieurs moteurs ayant un encombrement extérieur constant pour ventilateur d'habitacle d'automobile comportant deux poles aimantés en ferrite et une culasse de diamètre 59mm d'une puissance de l'ordre de 150W.

Dans la version standard, selon l'art antérieur, les aimants ont été usinés de façon précise à partir d'une ébauche frittée pour avoir un entrefer avec l'induit d'environ 0,7mm; ils ont été ensuite mis en place et collés dans la culasse par surmoulage à l'aide d'une résine thermodurcissable de façon à ce que ledit entrefer aimant-induit soit bien de 0,7mm.

Le surmoulage est tel qu'il n'y a pas de voile de résine, recouvrant la face polaire de l'aimant, se situant dans l'entrefer. On évite ainsi d'augmenter l'épaisseur d'entrefer ce qui serait nécessaire pour tenir compte des tolérances de faux-rond (culasse, induit) ou de montage et conduirait à une diminution des performances du moteur.

Dans la version 1, selon l'invention, des ébauches non usinées d'aimants permanents de volume plus faible puis mises en place dans la culasse et surmoulées à l'aide d'un matériau composite de perméabilité magnétique 4 à base de la même résine thermodurcissable et dans laquelle a été dispersée de la poudre de fer (taux de solide 40% en volume); l'entrefer matériau de surmoulage composite/induit est le même que dans la version standard. L'épaisseur de la couche polaire est d'environ 1mm aux endroits les plus minces, celle de la zone de retour de 3mm.

La version 2 se distingue de la version 1 principalement par un entrefer de l'ordre de 0,3mm et des aimants plus épais mais dont le volume reste inférieur à celui de la version standard.

Le tableau 1 donne les valeurs du flux, directement lié à la performance des moteurs, en fonction des paramètres géométriques des aimants et de la valeur d'entrefer pour les différentes versions.

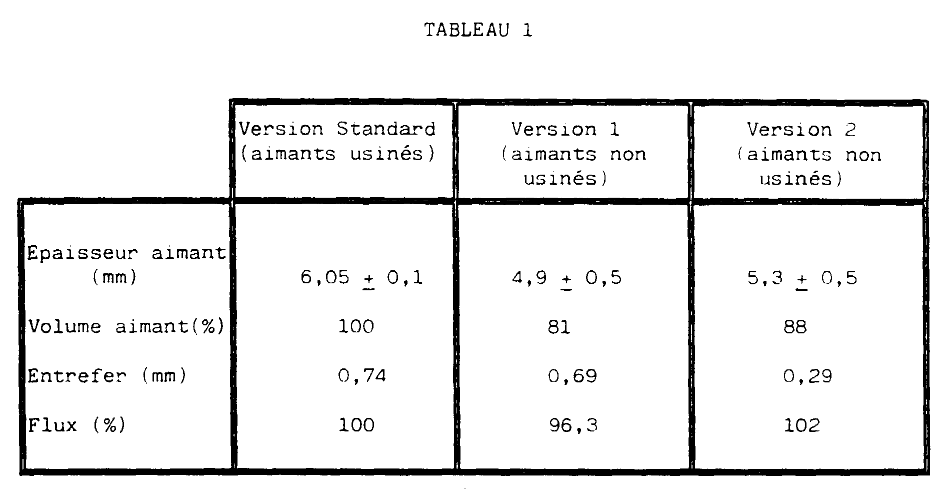

En comparant les versions standard et 1, on voit qu'à encombrement extérieur du moteur constant, on gagne prés de 20% de volume d'aimant, alors que les performances du moteur ne sont diminuées que de 3,7%, pertes qui pourraient être aisément compensées par exemple par un léger allongement des aimants. Mais plus avantageusement la comparaison des versions standard et 2 montre que l'invention permet, toujours à encombrement constant, de gagner 12% de volume d'aimant tout en augmentant les performances du moteur grâce à une épaisseur d'entrefer réduite.

## Revendications

1. Inducteur, pour machine tournante électrique, comportant une culasse (1) cylindrique creuse ou pleine sur une paroi latérale de laquelle est fixé au moins un aimant (2) ayant une face polaire située en regard d'un induit (6), caractérisé en ce que l'aimant (2) est fixé à la culasse (1) par un surmoulage enrobant au moins ladite face polaire à l'aide d'un matériau composite de surmoulage (4) comprenant un matériau ferromagnétique dispersé dans un liant solide amagnétique.

2. Inducteur selon la revendication 1, caractérisé en ce que la culasse (1) cylindrique est creuse et que le ou les aimants (2) sont fixés sur sa paroi latérale intérieure, l'induit (6) se situant à l'intérieur de l'inducteur.

3. Inducteur selon la revendication 1 caractérisé en ce que la culasse (1) cylindrique est pleine ou creuse et que le ou les aimants (2) sont fixés sur sa paroi latérale extérieure, l'induit (6) entourant alors l'inducteur.

4. Inducteur selon l'une quelconque des revendications 1 à 3 caractérisé en ce que l'épaisseur d'entrefer (5) est mesurée entre le matériau de surmoulage (4) et l'induit (6).

5. Inductucteur selon la revendication 4 caractérisé en ce que l'épaisseur d'entrefer (5) est toujours inférieure à 0,7mm et de préférence d'au plus 0,3mm.

6. Inducteur selon l'une quelconque des revendications 1 à 5 caractérisé en ce que l'épaisseur de la couche (12) de matériau de surmoulage (4) recouvrant la face polaire de l'aimant (2) est comprise entre 0,5 et 5mm.

7. Inducteur selon l'une quelconque des revendications 1 à 6 caractérisé en ce que le matériau de surmoulage (4) et les aimants (2) forment un ensemble rigide introduit dans la culasse (1) ou obtenu par injection, extrusion, compaction ou moulage dudit matériau dans la culasse.

8. Inducteur selon l'une quelconque des revendications 1 à 7 caractérisé en ce que les fuites de flux magnétiques le long des faces latérales des aimants sont réduites au minimum.

9. Inducteur selon la revendication 8 caractérisé en ce que l'épaisseur (8) du matériau de surmoulage le long des faces latérales des aimants est inférieure à 5mm.

10. Inducteur selon l'une quelconque des revendications 1 à 9 caractérisé en ce que les aimants (2) sont des aimants permanents à base de ferrites, ou de terres rares.

11. Inducteur selon l'une quelconque des revendications 1 à 10 caractérisé en ce que le matériau de surmoulage (4) a une perméabilité magnétique supérieure à 2 et de préférence comprise entre 4 et 40.

12. Inducteur selon l'une quelconque des revendications 1 à 11 caractérisé en ce que le matériau ferromagnétique dispersé dans le liant amagnétique est un métal ferromagnétique doux contenant au moins un élément du groupe Fe, Co, Ni.

13. Inducteur selon l'une quelconque des revendications 1 à 12 caractérisé en ce que le liant solide amagnétique est à base de résine thermodurcissable ou thermoplastique.

## Patentansprüche

1. Induktor für rotierende Elektomaschinen mit einem zylinderförmigen hohlen oder gefüllten Joch (1) auf einer Seitenwand, auf der mindestens ein Magnet (2) mit einer einem Anker (6) zugewandten Polfläche befestigt ist, dadurch gekennzeichnet, daß der Magnet (2) auf dem Joch (1) durch einen Abguß befestigt ist, der mit Hilfe eines Abguß-Verbundwerkstoffes (4), welcher einen in ein nichtmagnetisches festes Bindemittel eingelagerten ferromagnetischen Werkstoff enthält, mindestens die Polfläche umhüllt.

2. Induktor nach Anspruch 1, dadurch gekennzeichnet, daß das zylinderförmige Joch (1) hohl ist und der bzw. die Magneten (2) auf seiner inneren Seitenwand befestigt sind, wobei sich der Anker (6) innerhalb des Induktors befindet.

3. Induktor nach Anspruch 1, dadurch gekennzeichnet, daß das zylinderförmige Joch (1) gefüllt oder hohl ist und der bzw. die Magneten (2) auf seiner äußeren Seitenwand befestigt sind, wobei der Anker (6) dann den Induktor umgibt.

4. Induktor nach einem der Ansprüche 1 bis 3, dadurch gekennzeichnet, daß die Spaltbreite (5) zwischen dem Abgußwerkstoff (4) und dem Anker (6) gemessen wird.

5. Induktor nach Anspruch 4, dadurch gekennzeichnet, daß die Spaltbreite (5) stets weniger als 0,7 mm und vorzugsweise höchstens 0,3 mm beträgt.

6. Induktor nach einem der Ansprüche 1 bis 5, dadurch gekennzeichnet, daß die Dicke der Schicht (12) aus dem Abgußwerkstoff (4), die die Polfläche des Magneten (2) bedeckt, 0,5 bis 5 mm beträgt.

7. Induktor nach einem der Ansprüche 1 bis 6, dadurch gekennzeichnet, daß der Abgußwerkstoff (4) und die Magneten (2) einen starren Verbund bilden, der in dem Joch (1) eingelagert ist oder durch Einspritzen, Extrudieren, Verdichten oder Gießen des Werkstoffes in dem Joch hergestellt wird.

8. Induktor nach einem der Ansprüche 1 bis 7, dadurch gekennzeichnet, daß magnetische Streuflüsse entlang der Seitenflächen der Magnete auf ein Minimum begrenzt sind.

9. Induktor nach Anspruch 8, dadurch gekennzeichnet, daß die Dicke (8) des Abgußwerkstoffes entlang der Seitenflächen der Magnete weniger als 5 mm beträgt.

10. Induktor nach einem der Ansprüche 1 bis 9, dadurch gekennzeichnet, daß die Magneten (2) Dauermagnete auf der Basis von Ferriten oder seltenen Erden sind.

11. Induktor nach einem der Ansprüche 1 bis 10, dadurch gekennzeichnet, daß der Abgußwerkstoff (4) eine magnetische Permeabilität von mehr als 2 und vorzugsweise 4 bis 40 hat.

12. Induktor nach einem der Ansprüche 1 bis 11, dadurch gekennzeichnet, daß der in dem nichtmagnetischen Bindemittel eingelagerte ferromagnetische Werkstoff ein ferromagnetisches Weichmetall ist, das mindestens ein Element der Gruppe Fe, Co, Ni enthält.

13. Induktor nach einem der Ansprüche 1 bis 12, dadurch gekennzeichnet, daß das feste nichtmagnetische Bindemittel aus wärmehärtbarem oder thermoplastischem Harz besteht.

## Claims

1. An inductor for an electric rotary machine comprising a hollow or solid cylindrical yoke (1), on one side wall of which is attached at least one magnet (2) having a pole face disposed facing an armature (6), characterized in that the magnet (2) is attached to the yoke (1) by an over-molding which coats at least said pole face with a composite over-molding material (4) comprising a ferromagnetic material dispersed in a solid non-magnetic binder.

2. An inductor according to claim 1, characterized in that the cylindrical yoke (1) is hollow and that the magnet or magnets (2) are attached to its inner side wall, the armature (6) being disposed inside the inductor.

3. An inductor according to claim 1, characterized in that the cylindrical yoke (1) is solid or hollow and that the magnet or magnets (2) are attached to its outer side wall, the armature (6) thus surrounding the inductor.

4. An inductor according to any of claims 1 through 3, characterized in that the thickness of the air gap (5) is measured between the over-molding material (4) and the armature (6).

5. An inductor according to claim 4, characterized in that the thickness of the air gap (5) is always less than 0.7 mm and preferably no more than 0.3 mm.

6. An inductor according to any of claims 1 through 5, characterized in that the thickness of the layer (12) of over-molding material (4) covering the polar face of the magnet (2) is between 0.5 and 5 mm.

7. An inductor according to any of claims 1 through 6, characterized in that the over-molding material (4) and the magnets (2) form a rigid assembly inserted into the yoke (1) or obtained by the injection, extrusion, compaction or molding of said material into the yoke.

8. An inductor according to any of claims 1 through 7, characterized in that the leaks of magnetic flux along the lateral surfaces of the magnets are reduced to a minimum.

9. An inductor according to claim 8, characterized in that the thickness (8) of the over-molding material along the lateral surfaces of the magnets is less than 5 mm.

10. An inductor according to any of claims 1 through 9, characterized in that the magnets (2) are permanent magnets based on ferrites or on rare earths.

11. An inductor according to any of claims 1 through 10, characterized in that the over-molding material (4) has a magnetic permeability greater than 2 and preferably between 4 and 40.

12. An inductor according to any of claims 1 through 11, characterized in that the ferromagnetic material dispersed in the non-magnetic binder is a soft ferromagnetic metal containing at least one element from the group Fe, Co, Ni.

13. An inductor according to any of claims 1 through 12, characterized in that the solid magnetic binder is based on thermosetting or thermoplastic resin.
